## Europäisches Patentamt
## European Patent Office
## Office européen des brevets

(19)

(11) Veröffentlichungsnummer: **0 145 729**
**B1**

(12)

# EUROPÄISCHE PATENTSCHRIFT

(45) Veröffentlichungstag der Patentschrifft:
28.02.90

(21) Anmeldenummer: **84901952.6**

(22) Anmeldetag: **16.05.84**

(86) Internationale Anmeldenummer:
**PCT/CH 84/00078**

(87) Internationale Veröffentlichungsnummer:
**WO 84/04811 (06.12.84 Gazette 84/28)**

(51) Int. Cl.⁵: $G\ 01\ F\ 15/07,\ G\ 01\ F\ 1/07$

(54) DURCHFLUSSMENGENMESSGERÄT FÜR GASE UND VERWENDUNG DESSELBEN.

(30) Priorität: **26.05.83 CH 2865/83**

(43) Veröffentlichungstag der Anmeldung:
**26.06.85 Patentblatt 85/26**

(45) Bekanntmachung des Hinweises auf die Patenterteilung:
**28.02.90 Patentblatt 90/09**

(84) Bennante Vertragsstaaten:
**AT DE**

(56) Entgegenhaltungen:
**DE-A-1 574 010**
**DE-A-1 698 463**

(73) Patentinhaber: **Isell, Martin**
**Vereinsweg 18**
**CH-3012 Bern (CH)**

(72) Erfinder: **Isell, Martin**
**Vereinsweg 18**
**CH-3012 Bern (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft ein Durchflussmengenmessgerät für Gase mit einem Messflügel, vorzugsweise einem tangential beaufschlagten Turbinenrad als Antriebsorgan nach dem Oberbegriff des Anspruchs 1 und die Verwendung des Gerätes zur Überwachung des Gasvorrats in Flüssiggasflaschen.

Ein Gerät gemäß dem Oberbegriff des Anspruch 1 ist aus DE-A 1 698 463 bekannt.

Aufgabe der Erfindung ist es, ein Messgerät zu schaffen, das kleine Abmessungen aufweist und konstruktiv einfach ist, so dass es sich billig herstellen lässt und damit seine Anschaffung auch für Freizeitzwecke, insbesondere für das Camping tragbar ist.

Die erfindungswesentlichen Merkmale ergeben sich aus den Patentansprüchen 1 und 4.

Das Gerät ist vorzugsweise so ausgebildet, dass es mittels flexibler Schläuche zwischen Gasflasche und Verbraucher eingeschaltet werden kann. Im folgenden wird eine Ausführungsform der Erfindung anhand der Zeichnung näher erläutert. Dabei zeigen :

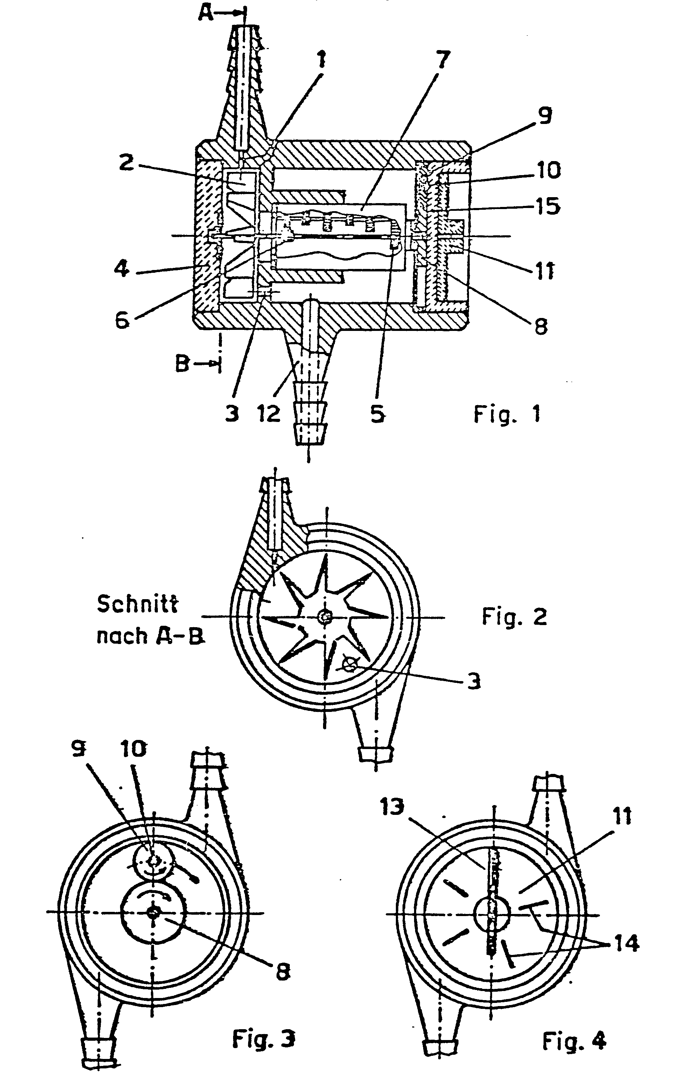

- Fig. 1 einen Axialschnitt durch das Gerät,
- Fig. 2 einen Schnitt nach der Linie A-B von Fig. 1 und
- Fig. 3 und 4 je eine Stirnansicht auf die Anzeigeseite des Gerätes.

Das Gas strömt durch eine Düse 1 tangential auf das 8-flügelige Turbinenrad 2 und über das Loch 3 in der Innenwand der Turbinenkammer zum Austrittsstutzen 12 . Die Drehzahl des Turbinenrades ist direkt proportional zur Durchflussgeschwindigkeit und ein von ihm angetriebenes integrierendes Anzeigeorgan gibt somit die jeweils durchgeströmte Gasmenge an. Die Turbinenkammer wird nach aussen durch einen durchsichtigen, schlagfesten Lagerdeckel 4 aus Kunststoff abgedeckt . Damit ist das Turbinenrad von aussen sichtbar, und die Gasströmung ist stets visuell überwachbar. Die gegenüberliegende Lagerung der Turbinenradachse befindet sich im Endritzel 5 des Untersetzungsgetriebes 7, das beispielsweise eins Untersetzung von $2,7 \cdot 10^6$ : 1 herbeiführt. Zur Anwendung kommt ein handelsübliches Miniatur=Aufsteckgetriebe mit Stirnradverzahnung mit möglichst kleinen Reibungsverlusten, was eine äusserst hohe Ansprechempfindlichkeit auf die Strömung gibt. Der Antrieb des Untersetzungsgetriebes von Turbinenrad erfolgt über ein Ritzel 6. Durch die Verwendung eines mit Ausnahme der antriebsseitigen Stirnfläche abgekapselten Getriebes und den Durchflussweg des Gases befindet sich das Getriebe zwar in der Gasatmosphäre, wird aber nicht direkt vom Gas durchströmt. Dadurch wird verhindert, dass vom Gasstrom mitgeführte Verunreinigungen in das Getriebe gelangen können. Das Untersetzungsgetriebe 7 treibt über das Anzeigeantriebsrad 8 ein Umlaufrädchen 9 an, das sich an einer zylindrischen Innenfläche des Anzeigegehäuses abwälzt. Das Zentrum des Umlaufrädchens 9 trägt einen farbigen Markierungspunkt 10 der den "Zeiger" dieser Analoganzeige darstellt. Der Winkel, um den sich der markierte Mittelpunkt 10 bezüglich der Achse des Rades 8 dreht, ist somit proportional zur durchgeflossenen Gasmenge, die sich an Markierungsstrichen 14 auf der durchsichtigen Rückstellscheibe 11 ablesen lässt. Die beiden Rädchen 8 und 9 lassen sich nach Wegnahme der Rückstellscheibe 11 und einer weiteren durchsichtigen und gasdichten Abdeckscheibe 15 abziehen und können durch ein Räderpaar 8, 9 mit einem anderen Durchmesserverhältnis ersetzt werden, wodurch das Gesamtuntersetzungsverhältnis zwischen Turbinenrad und "Zeiger" 9 verändert werden kann. Die Rückstellscheibe 11 ist mit einem Einstellschlitz 13 als Nullmarkierung und mehreren Strichmarkierungen 14 versehen, die eine Skala für die Durchflussmenge darstellen können

Bei der Verwendung des Gerätes für die Ueberwachung des Füllungsgrades von Flüssiggasflaschen werden Strichmarken so angebracht, dass jede derselben einem bestimmten Gasflaschentyp zugeordnet ist, derart dass beim Erreichen einer Strichmarkierung durch den "Zeiger" 10 der Leerzustand der betreffenden Flasche signalisiert wird. Die Rückstellscheibe 11 ist drehbar in der Abdeckscheibe 15 gelagert: ein unbeabsichtigtes Verdrehen derselben wird jedoch durch eigene Federkraft, mit der sie sich gegen die Abdeckscheibe 15 abstützt, verhindert.

Bei der Ueberwachung einer Gasflasche wird wie folgt vorgegangen: Das Gerät wird über flexible Schläuche zwischen die volle Gasflasche und den Verbraucher eingeschaltet und die Rückstellscheibe verdreht, bis sich die Nullmarkierung, d.h. der Schlitz 13 der Rückstellscheibe 11 über dem farbigen Mittelpunkt 10 des Umlaufrädchens befindet. Bei Gasentnahme dreht sich das Rädchen 9, wobei der Winkelabstand seines Mittelpunktes von der Nullmarkierung der der gerade in Betrieb befindfindlichen Flasche zugeordneten Strichmarke 14 ein Mass für den noch verfügbaren Gasvorrat gibt. Mit zwei Räderpaaren und einigen Strichmarken auf dar Rückstellscheibe ist das Gerät für praktisch alle handelsüblichen Gasflaschen verwendbar.

## Patentansprüche

1. Durchflussmengenmessgerät für Gase mit einem Turbinenrad (2), beiden das vom Turbinenrad (2) angetriebene Untersetzungsgetriebe (7) nicht dem Gasstrom ausgesetzt ist und bei dem eine mit Strichmarkierungen (14) verschine, als Anzeigeskala dienende Rückstellschiebe (11) von außen verdrehbar ist, dadurch gekennzeichnet, daß das Untersetzungsgetriebe ein.

Aufsteck-Untersetzungsgetriebe (7) ist, Welle am Ausgang des Untersetzungsgetriebes mit einem Anzeige-Antriebsrad (8) gekoppelt ist, das seinerseits ein Umlaufrädchen (9) antreibt, das sich auf einer zylindrischen Innenfläche des An-

3

zeigegehäuses abwälzt und dessen Zentrum mit einer Markierung (10) verschen ist, die das Zeigerorgan darstellt, daß beide Räder (8, 9) auswechselbar sind, um die Gesamtuntersetzung ändern zu können, und dass das Anzeige-Antriebsrad (8) und das Umlaufrädchen (9) mittels einer durchsichtigen Abdeckscheibe (15) in der die Rückstellscheibe (11) drehbar gelagert ist gasdicht von der Umgebung abgeschlossen sind.

2. Gerät nach Anspruch 1, dadurch gekennzeichnet, daß die Rückstellscheibe (11) durch eigene Federkraft, mit der sie sich gegen die Abdeckschibe (15) absätzt, in der jeweils eingestellten Lage festgeklemmt ist.

3. Gerät nach Anspruch 1 oder 2, dadurch gekennzeichnet, daß die Markierung (10) des Umlauffläche (9) fertig ist.

4. Verwendung des Durchflussmessgerätes nach einem der vorangehenden Ansprüche zur Ueberwachung des Füllungsgrades von Flüssiggasflaschen, wobei die Strichmarierungen (14) den verschiedenen Flaschentypen derart zugeordnet sind, dass das Zeigerorgan (10) den Leerzustand der betreffanden Flasche anzeigt, wann es die entsprechende Markierung erreicht hat.

## Claims

1. Flow meter for gases having a turbine wheel (2), wherein the reduction gear (7) driven by the turbine wheel (2) is not exposed to the flow of gas, and wherein a reset disc (11) provided with graduation marks (14) serving as an indicating scale is adjustable from outside, characterized in that the reduction gear is a detachable reduction gear (7), that the shaft at the output of the reduction gear is coupled to an indicator driving wheel (8) that drives in turn a planet wheel (9) which rolls on a cylindrical inside surface of the indiator housing and the center of which is provided with a marking (10) representing the indicator means, that the two wheels (8, 9) are interchangeable in order to be able to modify the overall reduction, and that the indicator driving wheel (8) and the planet wheel (9) are closed off gastightly from the environment by means of a transparent cover disc (15) in which the reset disc (11) is rotatingly mounted.

2. Meter according to claim 1, characterized in that the reset disc (11) is clamped fast in the respectively set position by its own spring tension with which it is braced against the cover disc (15).

3. Meter according to claim 1 or 2, characterized in that the marking (10) of the planet wheel is coloured.

4. Use of the flow meter according to one of the preceding claims for monitoring the degree of filling of liquid-gas bottles, the graduation marks

4

(14) being associated with the different types of bottles in such a way that the indicator means (10), when it has reached the corresponding mark, indicates the empty state of the respective bottle.

## Revendications

1. Débitmètre pour gaz comportant une roue de turbine (2), dans lequel le réducteur (7) entraîné par la roue de turbine (2) n'est pas soumis au flux de gaz et dans lequel on peut faire tourner de l'extérieur un disque de rappel (11), muni de traits de repère (14) et pouvant être utilisé comme cadran, caractérisé en ce que le réducteur est un réducteur embrochable (7), que l'arbre qui est à la sortie du réducteur est couplé à une roue menante indicatrice (8), entraînant de son côté un satellite (9), qui roule sur une surface intérieure cylindrique du boîtier indicateur et dont le centre est muni d'un repère (10), constituant l'organe indicateur: que les deux roues (8, 9) sont échangeables, pour pouvoir changer l'ensemble de la réduction; que la roue menante indicatrice (8) et le satellite (9) sont isolés de l'espace environnant d'une manière étanche au gaz au moyen d'une plaque couvrante transparente (15), dans laquelle est logé le disque de rappel (11).

2. Débitmètre suivant la revendication 1, caractérisé en ce que le disque de rappel (11) est bloqué par sa propre élasticité - au moyen de laquelle il s'appuie contre la plaque couvrante (15) - dans chaque position réglée.

3. Debitmètre suivant la revendication 1 ou 2, caractérisé en ce que le repère (10) du satellite (9) est en couleur.

4. Utilisation du débitmètre suivant une des revendications précédentes, pour la surveillance du degré de remplissage de bouteilles de gaz liquides, les traits de repère (14) étant attribués aux différents types de bouteilles, de sorte que l'organe indicateur (10) indique l'état de vide de la bouteille considérée, quand il a atteint le repère correspondant.

3

Fig. 1

Schnitt nach A-B

Fig. 2

Fig. 3

Fig. 4